# EUROPEAN PATENT SPECIFICATION

(11) **EP 4 376 189 B1**
(45) Date of publication and mention of the grant of the patent: **02.09.2026**
(21) Application number: 23843268.6
(22) Date of filing: 12.07.2023
(51) Int. Cl.: H01M 10/613, H01M 10/625, H01M 10/647, H01M 50/105, H01M 50/211, H01M 50/24, H01M 50/249, H01M 50/264, H01M 50/291, H01M 50/358

(54) **BATTERY PACK, CELL BLOCK INCLUDED THEREIN, AND VEHICLE INCLUDING THE SAME**
BATTERIEPACK UND DARIN ENTHALTENER ZELLENBLOCK SOWIE FAHRZEUG DAMIT
BLOC-BATTERIE ET BLOC DE CELLULES INTÉGRÉ DANS CELUI-CI, ET VÉHICULE COMPRENANT CE BLOC-BATTERIE

(30) Priority: 20.07.2022 KR 20220089868; 27.04.2023 KR 20230055757
(43) Date of publication of application: 29.05.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Plasseraud IP
(86) International application number: PCT/KR2023/009981
(87) International publication number: WO 2024/019418

(56) References cited:
- WO-A1-2022/124731
- WO-A1-2022/126841
- CN-U- 216 720 195
- KR-A- 20170 142 446
- KR-A- 20220 014 027
- KR-A- 20220 031 530
- KR-A- 20220 070 835
- KR-A- 20220 081 027
- US-A1- 2019 326 569
- US-A1- 2022 037 726
- US-B2- 11 563 251

## Description

### TECHNICAL FIELD

The present disclosure relates to a battery pack and a vehicle including the same, and more specifically, to a battery pack capable of improving assemblability while including a pouch-type battery cell, a unit part capable of constituting such a battery pack, and a vehicle including such a battery pack. The present application claims priority to Korean Patent Application No. 10-2022-0089868 filed on July 20, 2022 and Korean Patent Application No. 10-2023-0055757 filed on April 27, 2023.

### BACKGROUND ART

As the technology development and demand for various mobile devices, electric vehicles, energy storage systems (ESSs), and the like increase significantly, the interest in and demand for secondary batteries as an energy source are rapidly increasing. Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, battery packs have been widely used for driving or energy storage in medium/large devices such as electric vehicles and ESSs. A conventional battery pack includes one or more battery modules inside a pack case and a control unit that controls charge/discharge of the battery pack, such as a battery management system (BMS). Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside the pack case to form a battery pack.

In particular, pouch-type batteries have advantages in various aspects, such as light weight and less dead space when stacked, but are problematic in that they are vulnerable to external impact and somewhat inferior in assemblability. Therefore, it is common for a battery pack to be manufactured by first modularizing a plurality of cells and then accommodating them inside a pack case.

However, conventional battery packs may be disadvantageous in terms of energy density, assemblability, cooling, and the like due to modularization. Specifically, in the process of modularizing a plurality of battery cells by accommodating them inside a module case, the volume of the battery pack may be unnecessarily increased or the space occupied by the battery cells may be reduced due to various components such as the module case or stacking frame. A battery module is first configured by modularizing a plurality of battery cells and then the battery module is accommodated in a pack case, whereby there is a problem that the manufacturing process of the battery pack becomes complicated. The module case is accommodated inside the pack case and the battery cells are accommodated inside the module case, and thus, when the heat of the battery cells accommodated inside the module case is discharged to the outside of the pack case through the module case, the cooling efficiency may be reduced and the cooling structure may also be complicated.

Therefore, recently, attempts have been made to develop a cell to pack (CTP) type battery pack. However, the pouch-type battery itself, which is embedded in a soft pouch, is not easy for the assembly process of stacking it in the battery pack itself, and it is difficult to fix it stably, thereby being problematic in poor processibility, assemblability, and stability.

US 2022/037726 A1 relates to a battery pack for increasing energy density by increasing the number of battery cells accommodated in a predetermined space. US 2019/326569 A1 relates to a battery module loading structure capable of enhancing both mechanical stiffness and energy density. CN 216 720 195 U relates to a battery module, a battery and an electrical device. WO 2022/124731 A1 relates to a battery pack capable of preventing fire and efficiently transferring heat and a device including the same. WO 2019123930 A1 relates to a battery module including a plurality of battery cells.

### DISCLOSURE

### Technical Problem

The present disclosure is designed to solve the problems of the related art, and therefore the present disclosure is directed to providing a battery pack having excellent processibility, assemblability, and stability.

The present disclosure is also directed to providing a unit part capable of constituting such a battery pack.

The present disclosure is still also directed to providing a vehicle including such a battery pack.

However, technical problems to be solved by the present disclosure are not limited to the above-described problems, and other problems not mentioned herein may be clearly understood by those skilled in the art from the following description of the present disclosure.

### Technical Solution

A battery pack according to the present invention for solving the above-described problem includes a cell unit stack in which a plurality of cell units are stacked; a pack case accommodating the cell unit stack in an internal space; and a side wall located at an end of the cell unit stack in the internal space of the pack case and configured to support the pack case, wherein the plurality of cell units are stacked in at least one direction within the cell unit stack, and the cell unit includes one or more pouch-type battery cells and a cell cover configured to at least partially surround the pouch-type battery cells.

Here, the side wall may support the pack case in the horizontal direction orthogonal to the stacking direction of the cell units.

The pack case may include a lower plate and a plurality of side plates upright upward from the lower plate, wherein the side walls may be interposed between different side plates of the pack case.

At this time, both ends of the side wall may be coupled and fixed to different side plates of the pack case, respectively.

The pack case may further include an upper plate coupled over the side plate, wherein upper and lower ends of the side wall may also be in contact with the upper plate and the lower plate, respectively.

Furthermore, the pack case may further include a center beam between different side plates, wherein the side wall may be configured to support between the side plates and the center beam.

The side wall may be configured to have at least one side larger in size than the cell unit.

According to the invention, the side walls are respectively located at both ends of the cell unit in the stacking direction.

Further according to the invention, the two side walls located at both ends of the cell unit in the stacking direction have protrusions on their outer surfaces at different positions or at positions symmetrical to each other.

In an embodiment, a plurality of the cell unit stacks may be included along the stacking direction of the cell unit, wherein the side wall of one cell unit stack and the side wall of another cell unit stack may be adjacent to each other to form an internal space partitioned by two side walls.

Here, the internal space may extend in the horizontal direction orthogonal to the stacking direction of the cell units to form a venting channel.

The two side walls may include a first side wall provided at the right end of the cell unit stack and a second side wall provided at the left end of the cell unit stack in the left-right direction along the stacking direction of the cell units, wherein the first side wall may have a protrusion formed to protrude in the right direction at the upper or lower portion thereof, and the second side wall may have a protrusion formed to protrude in the left direction at the lower or upper portion thereof, and the first side wall of one cell unit stack may be adjacent to the second side wall of another cell unit stack to form the internal space.

The protrusion of the first side wall and the protrusion of the second side wall may be located at different positions in the horizontal or vertical direction so as not to interfere with each other.

The protrusion of the first side wall may be an extension portion of the main body of the first side wall bent perpendicular to the main body surface direction of the first side wall, and the protrusion of the second side wall may be an extension portion of the main body of the second side wall bent perpendicular to the main body surface direction of the second side wall.

The protrusion of the first side wall may contact or be coupled to the second side wall, the protrusion of the second side wall may contact or be coupled to the first side wall, or the protrusion of the first side wall may contact or be coupled to the protrusion of the second side wall.

Either of the first side wall and the second side wall may further include a protrusion formed to protrude in an outward direction at front or rear.

In addition, the side wall may protrude upward over the cell unit stack, and an inlet hole may be formed at the portion where the side wall protrudes.

The pouch-type battery cell may have a receiving portion in which an electrode assembly is accommodated and an edge portion around the receiving portion, wherein the cell cover may be configured to surround both sides of the receiving portion and a portion of the edge portion of the pouch-type battery cell.

According to another aspect of the present disclosure for solving another problem, a cell block is provided as a unit part capable of constituting such a battery pack. A cell block according to the present disclosure includes a cell unit stack in which a plurality of cell units are stacked; and a side wall located at an end of the cell unit stack, wherein the plurality of cell units are stacked in at least one direction within the cell unit stack, and the cell unit includes one or more pouch-type battery cells and a cell cover configured to at least partially surround the pouch-type battery cells, wherein the side walls are respectively located at both ends of the cell unit in the stacking direction.

Here, the two side walls located at both ends of the cell unit in the stacking direction may have protrusions on their outer surfaces at different positions or at positions symmetrical to each other.

In addition, a vehicle according to the present invention includes a battery pack according to the present disclosure.

### Advantageous Effects

According to one aspect of the present disclosure, a plurality of pouch-type battery cells may be stably accommodated inside a pack case without the configuration of a stacking frame such as a plastic cartridge or a separate module case.

Moreover, according to one aspect of the present disclosure, the pouch-type battery cells embedded in a soft pouch are easily made into a solid form, so that a configuration in which they are directly stacked inside a pack case may be more easily implemented. Accordingly, the assemblability and mechanical stability of the battery pack may be improved.

In particular, according to an embodiment of the present disclosure, it is possible to easily implement a configuration in which a plurality of pouch-type battery cells are stacked side by side in the horizontal direction in a vertically upright state.

In particular, according to another aspect of the present disclosure, a cell block in which cell units including pouch-type battery cells are blocked is provided, wherein a battery pack may be easily configured using such a cell block, and a plurality of cell units may be fixed efficiently within the cell block.

In addition, according to another embodiment of the present disclosure, a cross beam may be formed by itself in the process of seating cell blocks including a plurality of cell units adjacent to each other inside a pack case. Accordingly, a separate cross beam may not be included inside the pack case or its number may be dramatically reduced. In addition, in this case, there is no need to perform a process for inserting the cell unit into the space partitioned by a separate cross beam prepared inside the pack case in advance. In addition, according to the above embodiment, a process or the like for preparing a cross beam in advance inside the pack case may not be required. Therefore, by these various aspects, the processibility of manufacturing a battery pack may be improved.

In addition, according to another embodiment of the present disclosure, a venting channel may be formed simply by seating a plurality of cell blocks inside the pack case. Therefore, in the case of the present disclosure, it is possible to block or appropriately control the accumulation or discharge of heat corresponding to the ignition source among the three elements (fuel, oxygen, and ignition source) that generate flames. Moreover, in the case of the present disclosure, through the rapid and smooth discharge of venting gas, heat accumulation may be blocked and explosions due to an increase in internal pressure may be prevented. In addition, in the case of the present disclosure, a directional venting configuration may be easily implemented.

In addition, according to one aspect of the present disclosure, a battery pack with a CTP concept is provided, and a module case or the like is eliminated in such a battery pack, thereby improving cooling performance and energy density.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic view of a battery pack according to an embodiment of the present disclosure.
FIG. 2 is a perspective view schematically showing the configuration of a cell block included in the battery pack of FIG. 1.
FIG. 3 is an exploded perspective view of a partial configuration of FIG. 2.
FIG. 4 is a perspective view showing one cell unit included in the cell block of FIG. 2.
FIG. 5 is an exploded perspective view showing the cell unit shown in FIG. 4.
FIG. 6 is a view schematically showing a cross-sectional configuration of the cell unit of FIG. 4.
FIG. 7 is a view schematically showing a partial configuration of a battery pack according to another embodiment of the present disclosure.
FIG. 8 is a perspective view schematically showing the configuration of the right end of a cell block according to another embodiment of the present disclosure.
FIG. 9 is a perspective view schematically showing the configuration of the left end of a cell block according to another embodiment of the present disclosure.
FIGS. 10 and 11 are front views schematically showing a coupling configuration of side walls when two cell blocks are disposed adjacent to each other.
FIG. 12 is a perspective view schematically showing a configuration in which a venting channel is formed by coupling side walls between two cell blocks disposed adjacent to each other.
FIG. 13 is a perspective view showing a side wall to be coupled to the right end of a cell block according to still another embodiment of the present disclosure.
FIG. 14 is a perspective view showing a side wall to be coupled to the left end of a cell block according to still another embodiment of the present disclosure.
FIG. 15 is a front view schematically showing a coupling configuration of the side walls shown in FIGS. 13 and 14 when two cell blocks are disposed adjacent to each other according to still another embodiment of the present disclosure.
FIG. 16 is a view schematically showing the configuration of a vehicle according to an embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted. For reference, in this specification, terms indicating direction are terms based on the components shown in the accompanying drawings, and are relative terms that may change depending on the posture or position of the actual components.

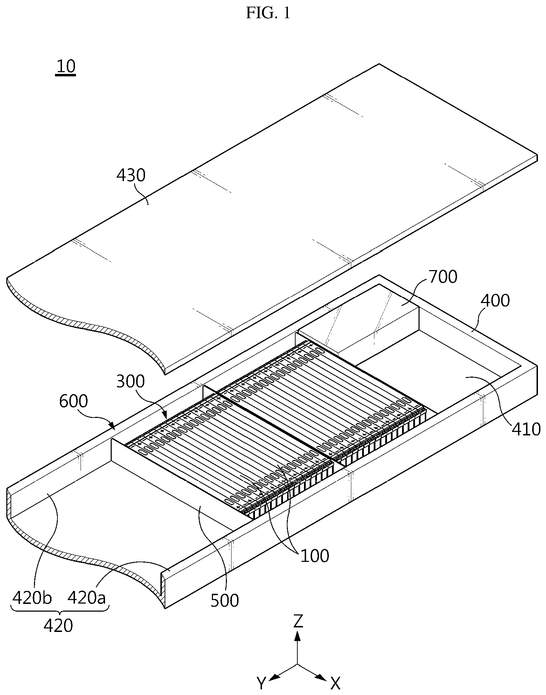

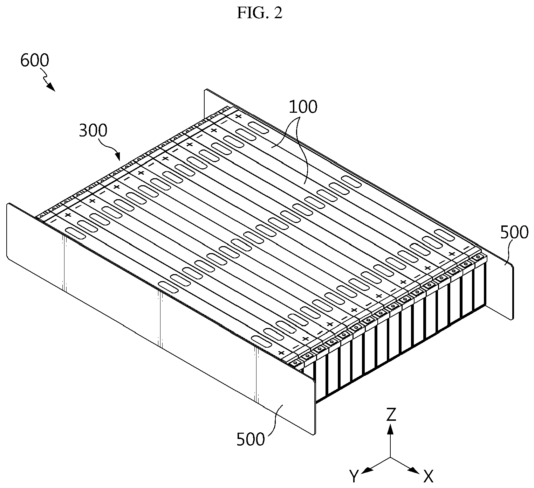

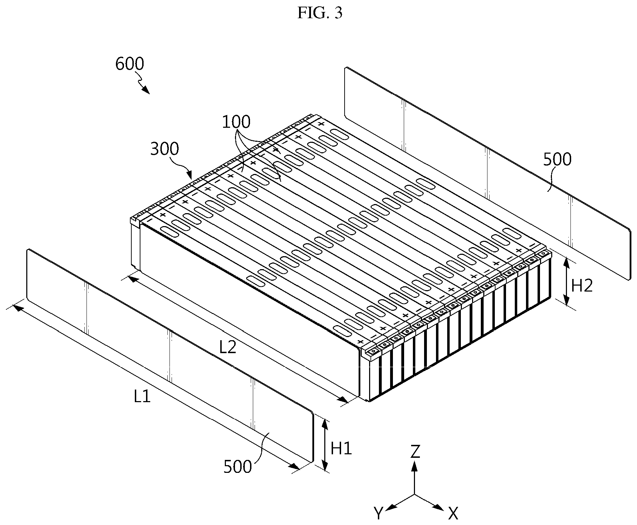

FIG. 1 is a schematic view of a battery pack according to an embodiment of the present disclosure. FIG. 2 is a perspective view schematically showing the configuration of a cell block included in the battery pack of FIG. 1, and FIG. 3 is an exploded perspective view of a partial configuration of FIG. 2.

First, referring to FIG. 1, the battery pack 10 according to one aspect of the present disclosure may include a plurality of cell units 100, a pack case 400, and a side wall 500.

The cell unit 100 may be included in plurality in the battery pack 10. And, the plurality of cell units 100 may be stacked in at least one direction within the pack case 400. For example, as shown in FIGS. 1 to 3, the plurality of cell units 100 may be disposed in the left-right direction facing each other, for example, side by side in the horizontal direction (Y-axis direction).

Referring further to FIGS. 2 and 3, the plurality of cell units 100 are stacked to form one cell unit stack 300. The plurality of cell units 100 are stacked in at least one direction within the cell unit stack 300. In FIG. 1, the pack case 400 accommodates the cell unit stack 300 in its internal space. The pack case 400 may be made of a plastic or metal material. In addition, the pack case 400 may employ various exterior materials of battery packs known at the time of filing the present disclosure.

In addition, the cell unit stack 300 and the side wall 500 form a cell block 600. That is, the cell block 600 according to the present disclosure may include a plurality of cell units 100 and side walls 500, as shown in FIGS. 2 and 3. FIG. 1 schematically shows a configuration in which two cell blocks 600 according to an embodiment of the present disclosure are seated in the pack case 400.

The plurality of cell units 100 may first be mounted on the pack case 400 to form the cell unit stack 300, and then the side wall 500 may be mounted thereon to form the cell block 600. As another example, it is also possible to form the cell unit stack 300 by stacking the plurality of cell units 100 outside the pack case 400 using a method such as adhesion and then mount the cell unit stack 300 on the pack case 400 to mount the side wall 500. As still another example, it is also possible to form the cell unit stack 300 outside the pack case 400 and then mount the side wall 500 thereon to form the cell block 600, which is then mounted on the pack case 400. In particular, when a plurality of cell units 100 are stacked and two side walls 500 are located at both ends of the cell units 100 in the stacking direction, the cell units 100 may be blocked and fixed by a pair of side walls 500, thereby simplifying and lightening the structures required for mounting the pouch-type battery cells, and reducing manufacturing costs, while facilitating handling and mounting of the pouch-type battery cells mounted on the battery pack 10.

An insulating pad or a flame suppression pad may also be interposed in at least a portion between the plurality of cell units 100 within the cell unit stack 300. Such an insulating pad or a flame suppression pad may prevent heat or flame that may be generated within any one cell unit 100 from being transferred to and affecting another cell unit 100. The flame suppression pad may be formed of a heat-resistant resin such as vinyl chloride resin, a material such as silicon or ceramic, a composite of a heat-resistant resin and a ceramic or glass filler, or a metal plate coated with insulation, but this is an exemplary and any flame-retardant material is sufficient. It is preferable that the flame suppression pad is made of a material that does not decompose, melt, or ignite at least up to the temperature at which thermal runaway of the pouch-type battery cell is generated (e.g., 150°C to 200°C).

In addition, when a plurality of cell units 100 are stacked and included in the battery pack 10, an adhesive member may be interposed between the cell units 100. For example, an adhesive member may be interposed in a portion where two cell units 100 face each other to adhesively fix them. Through this adhesive configuration, the connection configuration between the plurality of cell units 100 may be made more robust.

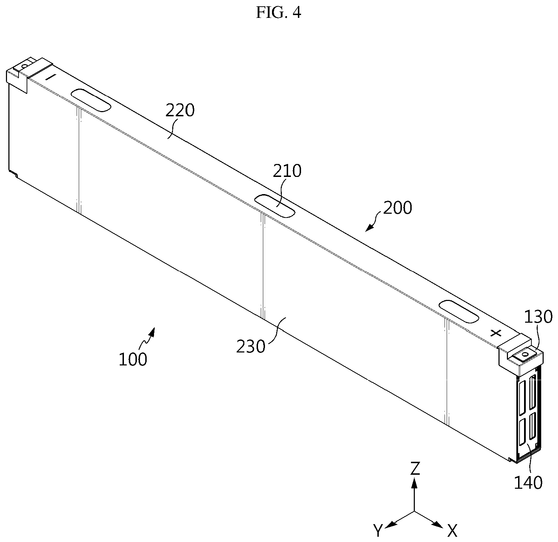

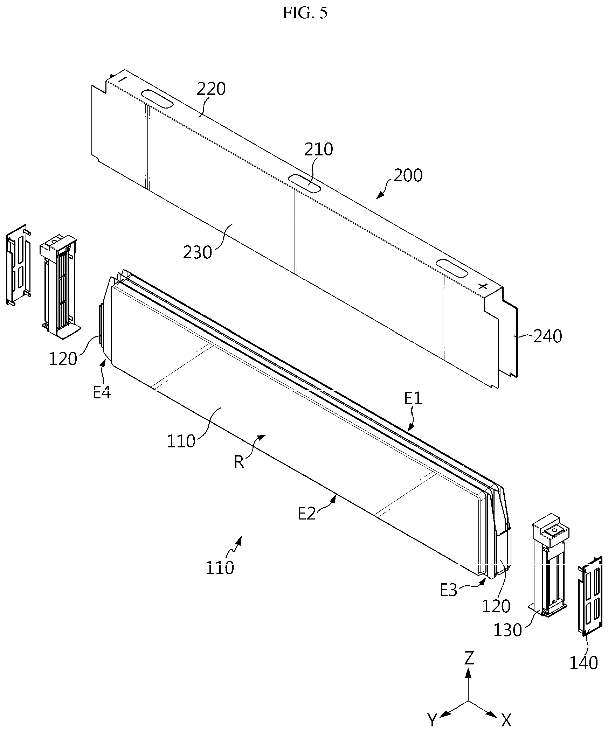

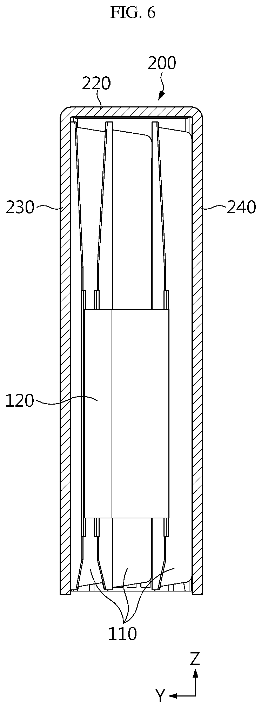

FIG. 4 is a perspective view showing one cell unit included in the cell block of FIG. 2, and FIG. 5 is an exploded perspective view showing the cell unit shown in FIG. 4. And, FIG. 6 is a view schematically showing a cross-sectional configuration of the cell unit of FIG. 4.

As shown in FIGS. 4 to 6, the cell unit 100 may include a pouch-type battery cell 110 and a cell cover 200. According to this aspect of the present disclosure, the cell cover 200 is coupled to the pouch-type battery cell 110, so that the pouch-type battery cell 110 may be effectively protected without a module case.

The pouch-type battery cell 110 may include an electrode assembly, an electrolyte, and a pouch exterior material. A plurality of such pouch-type battery cells 110 may be included in the battery pack 10. As shown in FIG. 5, each pouch-type battery cell 110 may have a receiving portion indicated by 'R' and edge portions indicated by 'E1' to 'E4'. Here, the receiving portion R may be a portion that accommodates an electrode assembly in which a positive electrode plate and a negative electrode plate are stacked on top of each other with a separator interposed therebetween. In addition, an electrolyte may be accommodated in this receiving portion R. And, the edge portions E1 to E4 may be disposed in a form surrounding the receiving portion R.

In particular, the edge portions E1 to E4 may be sealing portions where the pouch exterior material, which is the case of the pouch-type battery cell 110, is sealed. For example, in the embodiment of FIG. 5, there are four edge portions E1 to E4, which can be said to be located at the upper edge, lower edge, front edge, and rear edge, respectively, based on the receiving portion R. In this case, all four edge parts E1 to E4 may be sealing portions. Alternatively, some of the four edge portions E1 to E4 may be configured in a folded form that is not a sealing portion. For example, in the embodiment of FIG. 5, the upper edge portion E1, the front edge portion E3, and the rear edge portion E4 are all sealing portions, but the lower edge portion E2 may be a folded portion of the pouch exterior material. For example, the upper edge portion E1 may be a so-called double side folding (DSF) portion that is folded twice as a sealing portion of the pouch-type battery cell 110, and the lower edge portion E2 may be an unsealed portion of the pouch-type battery cell 110.

One cell unit 100 may include one or more such pouch-type battery cells 110. For example, each cell unit 100 may have three pouch-type battery cells 110. When each cell unit 100 includes a plurality of pouch-type battery cells 110, the plurality of pouch-type battery cells 110 may be stacked in at least one direction, for example, in the left-right direction, while the receiving portions R face each other. For example, if the direction along the long axis of the pouch-type battery cells 110 is referred to as the longitudinal direction (X-axis direction), the pouch-type battery cells 110 may be stacked in the width direction perpendicular to the longitudinal direction.

The cell cover 200 may be arranged to at least partially surround the pouch-type battery cell 110. For example, the cell cover 200 may be configured to at least partially surround three pouch-type battery cells 110, as shown in FIGS. 5 and 6.

The cell unit 100 may further include a busbar frame 130 and an insulating cover 140.

The busbar frame 130 may support an electrode lead 120 of at least one pouch-type battery cell 110 covered by the cell cover 200, and may be configured to electrically connect such an electrode lead 120 to an electrode lead 120 of another pouch-type battery cell 110. In this case, the busbar frame 130 may have a terminal electrically connected to the electrode lead 120.

The insulating cover 140 may be configured to prevent a short circuit of the electrode lead 120 or the busbar. To this end, the insulating cover 140 may be made of a polymer synthetic resin having insulating properties.

Moreover, if the electrode leads 120 are provided on both sides of the pouch-type battery cell 110, the busbar frame 130 and the insulating cover 140 may also be included on both sides where the electrode leads 120 are provided. For example, as shown in FIG. 5, if the electrode lead 120 protrudes both on the front side (X-axis direction in the drawing) and on the rear side (-X-axis direction in the drawing), the busbar frame 130 and the insulating cover 140 may also be located on both the front side and the rear side.

Inside the cell cover 200, one or more pouch-type battery cells 110 may be configured to be in an upright state in the vertical direction (Z-axis direction). As shown in FIG. 5, each pouch-type battery cell 110 has two wide surfaces on which the receiving portion R is located, and the edge portions E1 to E4, which are the edges of the wide surfaces, may have narrow surfaces where sealing portions or folded portions of the pouch exterior material are present. Therefore, it is generally difficult to stack the pouch-type battery cells 110 in a vertically upright form with the narrow surface facing down. However, in the battery pack 10 according to the present disclosure, the cell cover 200 may be configured to surround one or more pouch-type battery cells 110 and support the wrapped pouch-type battery cells 110 in a standing state, that is, an upright state.

In addition, in the pouch-type battery cell 110, the upper edge portion E1, which is a sealing portion, may be relatively more vulnerable to the discharge of high-temperature gas or flame than the lower edge portion E2, which is an unsealed portion. However, according to the above embodiment, the upper edge portion E1, which is a sealing portion, may be disposed to face the cell cover 200, thereby being more advantageous for directional venting.

The cell cover 200 may be made of a metal material. In particular, the cell cover 200 may be made of a steel material. Moreover, the cell cover 200 may be made of SUS material. When the cell cover 200 is made of SUS material, it has excellent mechanical strength and rigidity, and thus may more stably support the stacked state of the pouch-type battery cells 110. In addition, in this case, it is possible to more effectively prevent damage to or breakage of the pouch-type battery cell 110 from external impacts, such as needle bodies. In addition, in this case, handling of the pouch-type battery cell 110 may become easier.

In addition, even if a flame occurs in a specific battery cell, the cell cover 200 may be more effectively prevented from melting due to a flame or the like. When the cell cover 200 is made of SUS material, the overall structure may be stably maintained due to its high melting point in the event of occurrence of a flame from the pouch-type battery cell 110. In particular, in the case of SUS material, since its melting point is higher than that of aluminum material, it may not be melted even with flame ejected from the pouch-type battery cell 110 and its shape may remain stable. Therefore, the effect of preventing or delaying flame propagation between the pouch-type battery cells 110, venting control effects, and the like may be secured excellently, and even when a thermal event occurs, internal short circuits or structural collapse may be prevented, thereby increasing structural safety.

For example, the cell cover 200 may be directly seated on the bottom surface of the pack case 400. At this time, a portion of the cell cover 200, such as a lower end portion of the cell cover 200, may be seated in direct contact with the bottom surface of the pack case 400. And, when the lower end portion of the cell cover 200 is seated in this way, the cell cover 200 may be configured to remain stably seated. In this case, if the cell cover 200 is made of SUS material, the self-supporting state may be maintained more stably. Therefore, in this case, the standing state of the pouch-type battery cell 110 may be more reliably supported.

The cell cover 200 may be formed to have a thickness of approximately 2 mm. However, the cell cover 200 may be partially formed to have different thicknesses. In addition, the cell cover 200 may have **PI** films with a thickness of approximately 0.5 mm attached to both sides for insulation.

In addition, the cell cover 200 may include an insulating coating layer on its inner surface. The insulating coating layer may be coated, applied, or attached with any one of silicone resin, polyamide, and rubber. According to the configuration of the insulating coating layer of the cell cover 200 according to this embodiment, the insulating coating effect may be maximized with a minimum amount of coating. In addition, since an insulating coating layer is applied to the inner surface of the cell cover 200, insulation between the pouch-type battery cell 110 and the cell cover 200 may be strengthened.

The cell cover 200 may be configured to partially surround the pouch-type battery cell 110 so that at least one side of the wrapped pouch-type battery cell 110 is exposed to the outside. That is, the cell cover 200 may be configured to surround only a portion of the pouch-type battery cell 110 without fully surrounding the entire pouch-type battery cell 110. In particular, the cell cover 200 may be configured so that at least one side of the pouch-type battery cell 110 is exposed toward the pack case 400. In this respect, the cell cover 200 may be referred to by terms such as a cell sleeve.

In particular, the cell cover 200 may be configured to surround an edge portion that is not provided with an electrode lead among several edge portions of the pouch-type battery cell 110 accommodated therein. For example, referring to the embodiment shown in FIG. 5, the pouch-type battery cell 110 may have two electrode leads 120, that is, a positive electrode lead and a negative electrode lead. In this case, the two electrode leads may be located at the front edge portion E3 and the rear edge portion E4, respectively. In this case, the cell cover 200 may be configured to surround one of the two remaining edge portions E1, E2 except for the front edge portion E3 and the rear edge portion E4. The cell cover 200 may surround the upper edge portion E1 of the pouch-type battery cell 110 and expose the lower edge portion E2.

The pouch-type battery cell 110 can also be said to be formed in an approximately hexahedral shape. And, electrode leads 120, that is, a negative electrode lead and a positive electrode lead, may be formed on two of the six surfaces, respectively. And, the cell cover 200 may be arranged to surround at least a portion of three of the remaining four sides of the six-sided pouch-type battery cell 110 except for the two sides thereof on which the electrode leads 120 are formed. In this way, the cell cover 200 may be configured such that openings are formed on both sides corresponding to the electrode lead 120.

According to this embodiment of the present disclosure, it is possible to induce the discharge direction of flames or the like to the opening of the cell cover 200. For example, according to the above embodiment, the front and rear sides of the cell cover 200 where the electrode lead 120 is located are open, so that flames or the like may be discharged in these open directions. In particular, when the cell cover 200 is configured with the front and rear sides open as described above, side directional venting may be easily implemented. Alternatively, when the bottom or top of the cell cover 200 is configured in an open form, directional venting may be made toward the open side (open end) of the bottom or top of the cell cover 200.

Moreover, the cell cover 200 may be arranged to cover both sides of the receiving portion R and the upper edge portion E1 with respect to one or more pouch-type battery cells 110 accommodated and wrapped therein. For example, when the cell cover 200 is configured to surround three pouch-type battery cells 110 stacked in the left-right direction, the cell cover 200 may be configured to surround the left surface of the receiving portion R of the left pouch-type battery cell 110, the upper edge portions E1 of the pouch-type battery cell 110, and the right surface of the receiving portion R of the right pouch-type battery cell 110. In this case, the cross-sectional configuration of the cell cover 200, as viewed from the front side, can be said to be roughly similar to an 'n' shape. Therefore, in this case, the cell cover 200 may also be referred to as 'n-fin'.

More specifically, the cell cover 200 may include an upper cover portion 220, a first side cover portion 230, and a second side cover portion 240. Here, the upper cover portion 220 may be configured to surround the top of the upper edge portion E1 of the pouch-type battery cell 110 accommodated therein. The upper cover portion 220 may be configured in a planar shape. In this case, the upper cover portion 220 has a cross-section formed in a straight shape in the horizontal direction, so that the upper edge portion E1 of the pouch-type battery cell 110 may be wrapped in a straight shape from the outside

The first side cover portion 230 may be configured to extend downward from one end of the upper cover portion 220. For example, the first side cover portion 230 may be configured to extend long in a downward direction (-Z-axis direction in the drawing) from the left end of the upper cover portion 220. Moreover, the first side cover portion 230 may be formed in a planar shape. In this case, the first side cover portion 230 may be configured in a bent form at the upper cover portion 220. And, the first side cover portion 230 may be configured to surround the outside of one side receiving portion R of the pouch-type battery cell 110 accommodated therein.

The second side cover portion 240 may be positioned to be spaced apart from the first side cover portion 230 in the horizontal direction. And, the second side cover portion 240 may be configured to extend downward from the other end of the upper cover portion 220. For example, the second side cover portion 240 may be configured to extend long in a downward direction from the right end of the upper cover portion 220. Moreover, the second side cover portion 240 may also be configured in a planar shape like the first side cover portion 230. In this case, it can be said that the second side cover portion 240 and the first side cover portion 230 are disposed parallel to each other while being spaced apart in the horizontal direction. And, the second side cover portion 240 may be configured to surround the outside of the other side receiving portion R of the pouch-type battery cell 110 accommodated therein.

According to this embodiment of the present disclosure, the configuration of supporting and protecting one or more battery cells by one cell cover 200 may be easily implemented. In particular, according to the above embodiment, the lower edge portion E2 may be located adjacent to the open end of the cell cover 200 to face the pack case 400 without being surrounded by the cell cover 200, and may be in direct face-to-face contact with the case 400. Therefore, heat from the pouch-type battery cell 110 surrounded by the cell cover 200 may be quickly and smoothly discharged toward the pack case 400 below. Accordingly, the cooling performance of the battery pack 10 may be secured more effectively.

In particular, this configuration may be implemented more effectively when cooling is mainly performed in the lower portion of the pack case 400. For example, in the case of a battery pack mounted in an electric vehicle, cooling may be mainly performed in the lower portion of the pack case 400 as it is mounted on the lower portion of the vehicle body. At this time, as in the above embodiment, when the lower edge portion E2 of each pouch-type battery cell 110 is in face-to-face contact with the pack case 400, heat is quickly transferred from each pouch-type battery cell 110 to the pack case 400, and thus cooling performance may be further improved.

In addition, according to the above embodiment, when high-temperature gas or flame is discharged from the pouch-type battery cell 110 in a situation such as thermal runaway, the discharged gas or flame may be effectively prevented from heading toward the upper side. In particular, when a passenger is located on the upper side of the battery pack 10, such as in an electric vehicle, it is possible to suppress or delay gas or flame from heading toward the passenger according to the above embodiment.

In this way, according to the present disclosure, even if flame or gas is discharged from the pouch-type battery cell 110, it may be guided and discharged in a preset direction. In this case, even if thermal runaway occurs in any one pouch-type battery cell 110, the flame or gas generated in that pouch-type battery cell 110 may be discharged only in the preset direction through the cell cover 200. If the preset direction is not toward other cell covers 200, flame or gas may not be propagated to other pouch-type battery cells 110 disposed adjacent to the pouch-type battery cell 110 in which thermal runaway occurs. That is, even if thermal runaway occurs in any one pouch-type battery cell 110, the effect of the thermal runaway on the other pouch-type battery cells 110 may be minimized.

The cell cover 200 may be integrally formed. In this case, the cell cover 200 may be constructed by bending a metal plate with a plate structure. That is, the cell cover 200 may be formed in a shape where one plate is bent.

The cell cover 200 may be configured to surround one or more pouch-type battery cells 110 by bending both ends of one plate in the same direction. In particular, when an upper cover portion 220, a first side cover portion 230, and a second side cover portion 240 are provided in one cell cover 200, the upper cover portion 220, the first side cover portion 230, and the second side cover portion 240 may be formed of one plate. In this case, it can be said that several components of the cell cover 200 are integrally manufactured.

Here, each component may be distinguished through a bent portion. In particular, two bent portions may be formed in one plate. And, based on these two bent portions, the upper cover portion 220, the first side cover portion 230, and the second side cover portion 240 may be distinguished. In particular, the central portion of one plate may form the upper cover portion 220, and both sides may be bent or folded in a downward direction around the upper cover portion 220, thereby forming the first side cover portion 230 and the second side cover portion 240. In this way, the configuration of forming a bent portion in one plate to form the cell cover 200 may be implemented in various ways, such as pressing or roll forming.

According to this embodiment of the present disclosure, manufacturing of the cell cover 200 may be simplified. In addition, the cell cover 200 with a simplified structure is made of a metal material having higher rigidity than the case of the pouch-type battery cell 110, such as the pouch exterior material, so that at least one pouch-type battery cell 110 covered by the cell cover 200 may be protected from external impact or vibration. In addition, in this case, heat conduction performance through the cell cover 200 is further enhanced, which may further improve cooling performance.

The first side cover portion 230 and the pouch-type battery cell 110 may be bonded, and the second side cover portion 240 and the pouch-type battery cell 110 may be bonded. The bonding between the first side cover portion 230 and the pouch-type battery cell 110 and between the second side cover portion 240 and the pouch-type battery cell 110 may be direct, but may also be indirect in a state of further including an insulating member.

The cell cover 200 may include a venting hole provided at various positions depending on the intended venting direction. This venting hole may be provided by forming a notch in a predetermined part of the cell cover 200. As shown in FIGS. 4 and 5, the cell cover 200 may have a venting hole 210 formed in the upper cover portion 220. This venting hole 210 may be configured to penetrate between the inner and outer spaces so that gas may be discharged from the inner space of the cell cover 200 to the outside.

As such, one or more pouch-type battery cells 110 and the cell cover 200 configured to at least partially surround the pouch-type battery cells 110 may constitute one cell unit 100. In particular, this cell unit 100 may also be referred to as a scalable pouch unit (SPU) in that the number of pouch-type battery cells 110 accommodated inside the cell cover 200 or the like may be adjusted by adjusting the width of the cell cover 200 or the like. Therefore, in this case, changes in capacity or output by one cell cover 200 may be easily made. The battery pack 10 may include a plurality of cell units 100, and the scale may be easily expanded by increasing the number of cell units 100.

This cell unit 100 facilitates handling and mounting of the pouch-type battery cell 110 in the process of manufacturing the battery pack 10 including the pouch-type battery cell 110, and while preventing damage to the pouch-type battery cell 110, it not only has the effect of simplifying and lightening the structures required for mounting the pouch-type battery cell 110, but also enables to flexibly cope with changes in capacity or output.

The cell cover 200 may be configured to support the stacked state of the plurality of pouch-type battery cells 110 inside the pack case 400 through a structure that surrounds the battery cells in this way. For example, a plurality of pouch-type battery cells 110 may be stacked in the horizontal direction. At this time, the cell cover 200 may be configured to stably maintain the stacked state of the plurality of pouch-type battery cells 110 stacked in the horizontal direction.

According to this aspect of the present disclosure, a plurality of pouch-type battery cells 110 may be directly seated and accommodated inside the pack case 400 without a module case. In particular, in the case of the pouch-type battery cell 110, the exterior material is made of a soft material like the pouch of aluminum laminate sheet, so it can be said that it is vulnerable to external impact and has low hardness. Therefore, it is not easy to accommodate the pouch-type battery cell 110 itself inside the pack case 400 without accommodating it in the module case. However, in the case of the present disclosure, the plurality of pouch-type battery cells 110 are coupled to the cell cover 200 in a state where at least a portion is surrounded by the cell cover 200 and then are directly accommodated inside the pack case 400, and their stacking state may be maintained stably.

Moreover, in the case of the present disclosure, a CTP type battery pack using the pouch-type battery cell 110 may be implemented more efficiently. That is, in the case of the present disclosure, the battery pack 10 may be arranged in a form of directly accommodating the pouch-type battery cell 110 inside the pack case 400, rather than accommodating the pouch-type battery cell 110 inside a separate module case and accommodating this module case inside the pack case 400. In this case, at least one side of the pouch-type battery cell 110 may be exposed to the outside of the cell cover 200 and may be disposed to directly face the pack case 400.

Therefore, according to this aspect of the present disclosure, the battery pack 10 does not need to be further provided with a module case, a stacking frame, or fastening members such as bolts for maintaining the stacked state of the cells. Accordingly, the space occupied by other components, such as a module case or a stacking frame, or the resulting space for securing tolerances may be eliminated. Therefore, since the battery cells may occupy more space as much as the removed space, the energy density of the battery pack may be further improved. In particular, the pouch-type battery cell 110 having a soft case may be directly assembled to the pack case 400 of the battery pack 10, thereby maximizing space utilization of the battery pack 10 and significantly improving energy capacity.

In addition, according to this aspect of the present disclosure, since a module case, stacking frame, a bolt, or the like are not provided, the volume or weight of the battery pack may be reduced, and the manufacturing process may be simplified.

According to the present disclosure, the assemblability of the battery pack 10 may be improved. In particular, according to an embodiment of the present disclosure, the process of preparing a battery module by accommodating the pouch-type battery cell 110 in a module case, and the process of accommodating one or more battery modules prepared in this way in the pack case 400 may not be performed. Accordingly, the manufacturing process may be simplified, and manufacturing time may be reduced.

In addition, according to this aspect of the present disclosure, handling of the pouch-type battery cell 110 may become easier. For example, when accommodating a plurality of pouch-type battery cells 110 inside the pack case 400, the pouch-type battery cells 110 may be held by a jig or the like. At this time, the jig may hold the cell cover 200 surrounding the pouch-type battery cell 110 or the side wall 500, rather than directly holding the pouch-type battery cell 110. Accordingly, damage to or breakage of the pouch-type battery cell 110 caused by the jig may be prevented.

Referring to FIG. 1 again, the pack case 400 has an empty space formed therein as shown in FIG. 1, and may accommodate a plurality of cell unit stacks 300 in this internal space. In particular, the pack case 400 includes a lower plate 410 and a plurality of side plates 420 that stand upward from the lower plate 410, and a plurality of cell units 100 or cell unit stacks 300 may be directly seated on the upper surface of the lower plate 410 of the pack case 400. Moreover, the lower end of the cell cover 200 may be seated in direct contact with the lower plate 410 of the pack case 400. In addition, the lower end of the pouch-type battery cell 110 accommodated inside the cell cover 200 may also be directly seated on the lower plate 410 of the pack case 400. In this way, the lower plate 410 and the side plate 420 of the pack case 400 form a box-shaped lower case with an open top, and a plurality of cell unit stacks 300 may be accommodated in the inner space thereof.

In particular, the pack case 400 places the edge portions E1 to E4 of the pouch-type battery cell 110 downward in the internal space so that the pouch-type battery cell 110 is accommodated in an upright state. In the embodiment shown in FIGS. 1 to 6, an example in which the lower edge portion E2 of the pouch-type battery cell 110 is positioned downward is provided.

The side wall 500 may be located at an end of the cell unit stack 300 in the internal space of the pack case 400. The side wall 500 may be located at an end of the cell unit 100 in the stacking direction. In particular, the side wall 500 may be coupled to the outer side of the cell unit stack 300 in the stacking direction. Here, the side wall 500 may be coupled to the cell unit stack 300 by various fastening methods such as bolting, welding, and hooking. Moreover, the side wall 500 may fix the stacked state of the cell unit stack 300.

In addition, the side wall 500 may be configured to support the pack case 400. For example, when the cell block 600 is seated in the internal space of the pack case 400, the side wall 500 may be interposed between different side plates 420 of the pack case 400. For example, as shown in the embodiment of FIG. 1, the side wall 500 may be interposed between a front plate 420a and a rear plate 420b, which are upright while facing each other in opposite directions as an internal configuration of the pack case 400. In particular, both ends of the side wall 500 may be coupled and fixed to the front plate 420a and the rear plate 420b, respectively.

According to this embodiment of the present disclosure, the side wall 500 of the cell block 600 not only maintains the stacked state inside the cell block 600, but also serve to mechanically support the pack case 400 on which the cell block 600 is seated. In particular, since the side wall 500 supports between different side plates 420a, 420b of the pack case 400, it may serve as a pack beam or a cross beam. Accordingly, the overall shape of the pack case 400 may be maintained despite external impacts, while the components accommodated therein may be protected. In this case, cross beams and the like that are included in conventional battery packs may be removed or reduced. Therefore, when manufacturing the battery pack 10, assembly convenience and processability are improved, while manufacturing cost and time may be reduced.

When the pack case 400 is made of a light material such as aluminum for weight reduction, the side wall 500 may further supplement the rigidity of the pack case 400. Furthermore, the side wall 500 of the cell block 600 also has the effect of evenly distributing the pressure applied to the plurality of cell units 100 throughout the cell units 100 while blocking or grouping the plurality of cell units 100.

Moreover, the side wall 500 may support the pack case 400 in the horizontal direction orthogonal to the stacking direction of the cell units 100, for example, in the front-rear direction (X-axis direction). Alternatively, the side wall 500 may support the pack case 400 in the vertical direction. For example, the pack case 400 may further include an upper plate 430 coupled over the side plate 420, and the upper and lower ends of the side wall 500 may be configured to be in contact with the upper plate 430 and the lower plate 410, respectively, to support between the lower plate 410 and the upper plate 430, which are the floor and ceiling surfaces of the pack case 400.

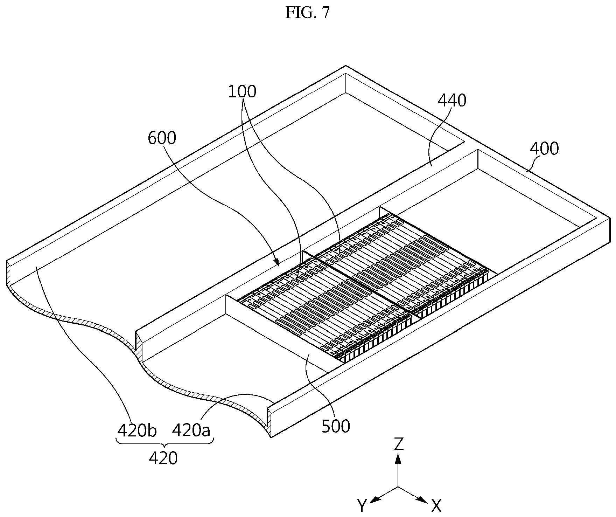

FIG. 7 is a view schematically showing a partial configuration of a battery pack according to another embodiment of the present disclosure. FIG. 7 also shows a configuration in which two cell blocks 600 are seated in the pack case 400.

As shown in FIG. 7, a center beam 440 may be formed in the central portion of the pack case 400. For example, the pack case 400 may further include a center beam 440 between different side plates 420a, 420b. In this case, the side wall 500 of the cell block 600 may be interposed between the center beam 440 and the side plate 420. And, the side wall 500 may be configured to support between the center beam 440 and the side plate 420. The cell blocks 600 may be arranged along the Y-axis direction as shown, and may also be arranged along the X-axis direction. Accordingly, the plurality of pouch-type battery cells 110 may be disposed in the front-rear and horizontal directions within the battery pack 10, and in a manner forming a plurality of rows in the front-rear and horizontal directions.

The side wall 500 may be configured to have at least one side larger in size than the cell unit 100. For example, as shown in FIG. 3, the length L1 in the front-rear direction of the side wall 500 may be configured to be longer than the length L2 in the front-rear direction of the cell unit 100. Alternatively, the height H1 in the vertical direction of the side wall 500 may be configured to be higher than the height H2 in the vertical direction of the cell unit 100. In this case, external impact, pressure, or the like may be transmitted only to the side wall 500, and may be prevented or reduced from being transmitted to the cell unit 100.

The side wall 500 may be made of a metal material capable of securing mechanical rigidity, such as aluminum. In this case, the side wall 500 may transfer heat generated in the cell unit 100 to the outside, thereby improving the cooling performance of the battery pack 10. Alternatively, the side wall 500 may be made of a material such as steel to increase mechanical strength. In addition, the side wall 500 may be made of other materials, such as polymers, as long as mechanical strength above a certain level can be secured. In addition, it can be made of a material that combines aluminum and a polymer synthetic resin through insert molding.

The side walls 500 are located at both ends of the cell unit 100 in the stacking direction, respectively. For example, referring to what is shown in FIGS. 2 and 3, the side wall 500 are respectively provided at the left end and the right end of the cell unit stack 300 in a state where a plurality of cell units 100 are stacked in the left-right direction.

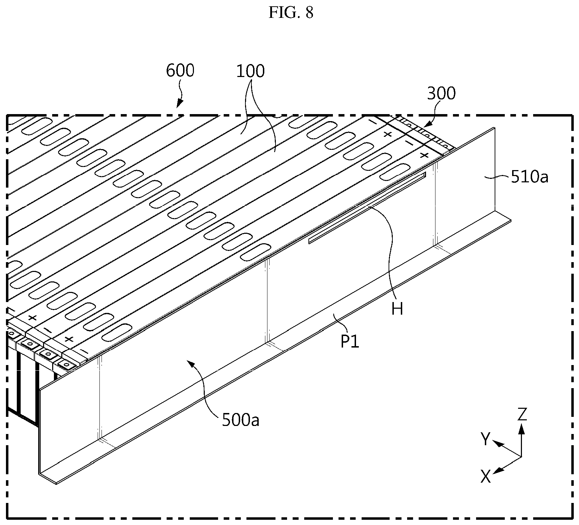

Here, the two side walls 500 located at both ends of the cell unit 100 in the stacking direction may have protrusions at different positions on their outer surfaces. This configuration will be described in more detail with further reference to FIGS. 8 to 12.

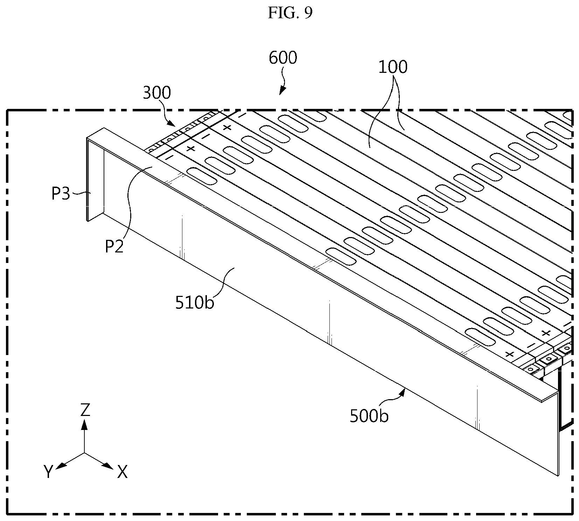

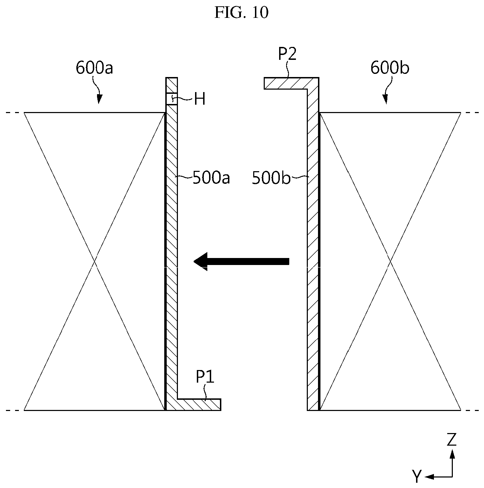

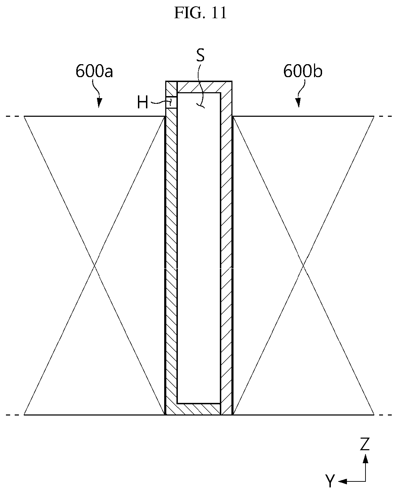

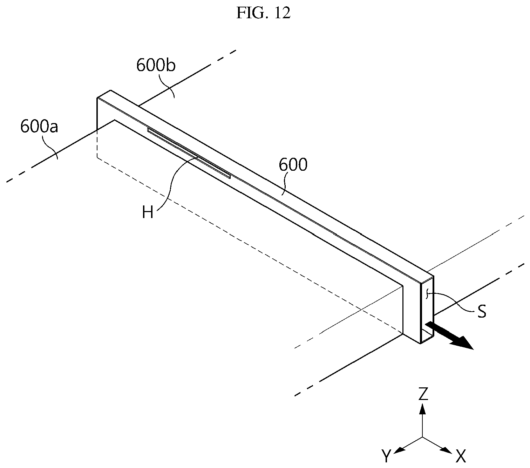

FIG. 8 is a perspective view schematically showing the configuration of the right end of a cell block according to another embodiment of the present disclosure. FIG. 9 is a perspective view schematically showing the configuration of the left end of a cell block according to another embodiment of the present disclosure. In addition, FIGS. 10 and 11 are front views schematically showing a coupling configuration of side walls when two cell blocks are disposed adjacent to each other. And, FIG. 12 is a perspective view schematically showing a configuration in which a venting channel is formed by coupling side walls between two cell blocks disposed adjacent to each other.

First, referring to FIG. 8, a side wall (hereinafter referred to as a right wall or a first side wall 500a) provided at the right end of the cell unit stack 300 in the left-right direction along the stacking direction of the cell unit 100 may have a protrusion formed to protrude in an outward direction (e.g., right direction) at the lower portion thereof, as indicated by P1 in the main body 510a. And, referring to FIG. 9, a side wall (hereinafter referred to as a left wall or a second side wall 500b) provided at the left end of the cell unit stack 300 may have a protrusion formed to protrude in an outward direction (e.g., left direction) at the upper portion thereof, as indicated by P2 in the main body 510b. In addition, the second side wall 500b, which is the left wall, may be provided on the main body 510b with a protrusion formed to protrude in an outward direction (e.g., left direction) at the rear portion thereof, as indicated by P3.

Here, with respect to one cell block 600, it can also be said that FIG. 8 shows the right end and FIG. 9 shows the left end. Therefore, when a plurality of cell blocks 600 are disposed adjacent to each other, the first side wall 500a, which is the right wall, and the second side wall 500b, which is the left wall, of different cell blocks 600 may face each other, in which case, the protrusions P1 to P3 of the first side wall 500a and the second side wall 500b may be located at different positions in the horizontal or vertical direction so as not to interfere with each other.

For example, when the second cell block 600b is moved toward the first cell block 600a as shown in FIG. 10, the side walls 500a, 500b may be adjacent to each other between two adjacent cell blocks (the first cell block 600a and the second cell block 600b) as shown in FIG. 11. Furthermore, they may be coupled to each other. That is, as shown in FIGS. 10 and 11, when the first cell block 600a and the second cell block 600b are disposed adjacent to each other, the protrusion P1 provided in the first side wall 500a of the first cell block 600a and the protrusions P2, P3 provided in the second side wall 500b of the second cell block 600b may not collide with each other. And, the protrusion P1 of the first side wall 500a may contact or be coupled to the second side wall 500b. The protrusions P2, P3 of the second side wall 500b may contact or be coupled to the first side wall 500a.

According to this configuration of the present disclosure, the first cell block 600a and the second cell block 600b may have a structure in which they are inserted and fastened to each other, thereby reducing the space occupied by the array of a plurality of cell blocks 600 and improving the coupling property between them.

In particular, when a plurality of cell blocks 600 are adjacent or coupled to each other, two side walls 500 provided in different cell blocks 600 and coupled together may form one pack beam. For example, in the embodiment shown in FIG. 11, a second side wall (not shown) of the first cell block 600a may be coupled to a first side wall (not shown) of another cell block (not shown) adjacent thereto to the left to form one pack beam. Likewise, a first side wall (not shown) of the second cell block 600b may be coupled to a second side wall (not shown) of another cell block (not shown) adjacent thereto to the right to form one pack beam.

In addition, when the two side walls 500 are adjacent to each other, they may be configured to form an empty space therein. For example, in the embodiment shown in FIG. 11, when the first side wall 500a of the first cell block 600a and the second side wall 500b of the second cell block 600b are coupled, an empty space may be formed therein, as indicated by S.

In particular, this empty space may be defined by the protrusions P1 to P3 of the side walls 500a, 500b and the main bodies 510a, 510b, and is divided into two side walls 500 adjacent to each other. For example, referring to the embodiment of FIGS. 8 to 11, the main body 510a and the protrusion P1 of the first side wall 500a of the first cell block 600a may define the left side and lower portion of the internal space indicated by S. In addition, the main body 510b and the protrusions P2, P3 of the second side wall 500b of the second cell block 600b may define the right side, upper portion, and rear side of the internal space indicated by S.

Moreover, the internal space S defined by the side walls 500 provided in the two different cell blocks 600a, 600b adjacent to each other may function as an insulating layer. Therefore, in this case, the propagation of heat, flames, or the like between the cell blocks 600a, 600b may be prevented or suppressed.

In addition, the two side walls 500 may be configured to form a venting channel through the internal space S formed adjacent to each other. That is, the internal space S formed by the two side walls 500 may function as a venting channel. For example, referring to what is shown in FIG. 12, when the first cell block 600a and the second cell block 600b are disposed adjacent to each other, whereby the first side wall 500a of the first cell block 600a and the second side wall 500b of the second cell block 600b are coupled to each other, an empty space is formed therein, and this empty space may be formed as a venting channel.

While the pouch-type battery cell 110 has the advantage of enabling to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell 110 occurs due to various reasons, one of which may be a case where an overcharge exceeding a limit flows through the pouch-type battery cell 110. When an overcharge is applied, the pouch-type battery cell 110 generates heat by Joule heating, and thus the internal temperature of the pouch-type battery cell 110 rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell 110 due to exposure to high temperature, external impact, and the like, as well as such overcharge, it is necessary to effectively discharge the gas to ensure the safety of the secondary battery. Discharging gas generated inside the secondary battery to the outside is called venting. When venting gas is discharged from the pouch-type battery cell 110 included in the battery pack 10 according to an embodiment of the present disclosure, the venting gas may be discharged through the venting channel to ensure the safety of the secondary battery.

Specifically, when venting gas or the like is generated in the first cell block 600a or the second cell block 600b, the generated gas may flow into the space partitioned by the side wall 500 as indicated by S in FIG. 12. And, such venting gas or the like may flow along the internal space S formed by the side wall 500 and then be discharged to the outside as indicated by an arrow in FIG. 12.

To this end, the two side walls 500 may be configured such that a specific portion is open while being coupled to each other. For example, as shown in FIGS. 8 to 12, the two side walls 500 may be configured such that the front side thereof is open while being coupled to each other.

Therefore, the venting gas of the first cell block 600a or the second cell block 600b flowing into the venting channel may flow along the venting channel and then be discharged to the outside through the opening, as indicated by the arrow in FIG. 12. For example, when venting gas is generated due to thermal runaway or the like in the pouch-type battery cell 110 accommodated inside the cell cover 200, the generated venting gas may move in the front-rear direction (in other words, longitudinal direction) through the internal space S partitioned by the side wall 500. Accordingly, the internal pressure of the cell cover 200 may be prevented from increasing, and efficient venting control, such as guiding the discharge direction of venting gas, may be possible. In the configuration shown in FIGS. 8 to 12, the front portion in which the protrusion P3 is not provided in the side wall 500 may function as an outlet for the venting channel.

According to an embodiment of the present disclosure described hereinabove, gas or the like emitted from the pouch-type battery cell 110 may be smoothly discharged to the outside. Moreover, according to an embodiment of the present disclosure, the discharge direction of the gas or flame emitted from the pouch-type battery cell 110 may be controlled. Accordingly, the propagation of thermal runaway between adjacent battery cells may be effectively prevented.

Meanwhile, the side wall 500 may be configured such that the side wall 500 does not include the protrusion P3, whereby the internal space S partitioned by the side wall 500 is open in both the front and rear portions. In addition, in this embodiment, the case where the protrusion P3 is provided on the second side wall 500b of the second cell block 600b has been described, but the protrusion P3 may be formed to protrude in an outward direction (e.g., right direction) from the first side wall 500a of the first cell block 600a. In addition, while this embodiment illustrates that the protrusion P3 is formed to protrude in an outward direction at the rear of the side wall 500, the protrusion P3 may be provided at the front of the side wall 500.

Meanwhile, when the space between the side walls 500 of the adjacent cell blocks 600 functions as a venting channel, an inlet hole for introducing the venting gas of the cell unit 100 into the venting channel may be formed in the side wall 500.

For example, as indicated by H in FIGS. 8, 10 to 12, an inlet hole may be formed in the side wall 500. For example, this inlet hole H may be located on the upper side of the side wall 500 and may be formed to penetrate outward from the cell unit 100. Preferably, the side wall 500 protrudes upward above the cell unit stack 300, and an inlet hole H is formed in a portion where the side wall 500 protrudes. Accordingly, the venting gas generated in the cell unit 100 may pass through the inlet hole H and flow into the venting channel.

Meanwhile, in FIGS. 8, 10 to 12, the inlet hole H is shown only in the first side wall 500a of the cell block 600, but it is of course possible that the inlet hole H may also be formed in the second side wall 500b. Accordingly, when the first cell block 600a and the second cell block 600b are disposed adjacent to each other, whereby the first side wall 500a of the first cell block 600a and the second side wall 500b of the second cell block 600b are coupled to each other, the inlet hole of the first cell block 600a and the inlet hole of the second cell block 600b may be located to face each other, and at this time, they are located at different positions in the horizontal or vertical direction. In this case, venting gas or the like flowing into the venting channel through the inlet hole of the first cell block 600a may be prevented from flowing into the cell unit 100 of the second cell block 600b again through the inlet hole of the second cell block 600b.

In addition, the battery pack 10 according to the present disclosure may further include a control module 700 accommodated in the internal space of the pack case 400, as shown in FIG. 1. This control module 700 may include a BMS. The control module 700 is mounted in the internal space of the pack case 400 and may be configured to generally control the charge/discharge operation or data transmission/reception operation of the pouch-type battery cell 110. The control module 700 may be provided in a pack unit rather than a module unit. More specifically, the control module 700 may be provided to control the charge/discharge state, power state, and performance state of the pouch-type battery cell 110 through pack voltage and pack current. The control module 700 estimates the state of the pouch-type battery cell 110 in the battery pack 10 and manages the battery pack 10 using the estimated state information. For example, state information of the battery pack 10, such as state of charge (SOC), state of health (SOH), maximum input/output power allowance, and output voltage of the battery pack 10, is estimated and managed. And, using this state information, the charging or discharging of the battery pack 10 may be controlled, and furthermore, the replacement time of the battery pack 10 may also be estimated.

The battery pack 10 according to the present disclosure may further include a battery disconnect unit (BDU, not shown). The battery disconnect unit may be configured to control the electrical connection of battery cells to manage the power capacity and function of the battery pack 10. To this end, the battery disconnect unit may include a power relay, a current sensor, a fuse, and the like. The battery disconnect unit is also provided in a pack unit rather than a module unit, and various battery disconnect units known at the time of filing the present disclosure may be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows an operator to shut off the power by manually disconnecting the service plug. In addition, it may also further include flexible busbars or cables for interconnecting at least one cell unit block.

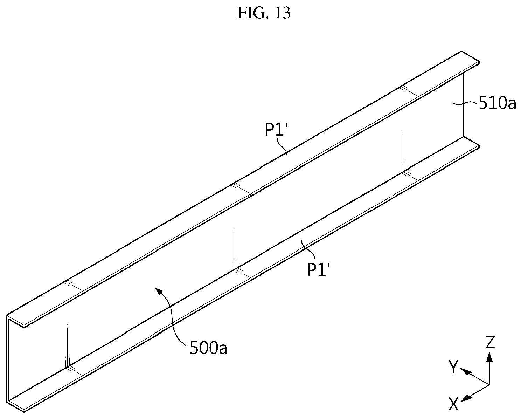

The two side walls 500 located at both ends of the cell unit 100 in the stacking direction may also have protrusions on their outer surfaces at symmetrical positions. This configuration will be described with further reference to FIGS. 13 to 15.

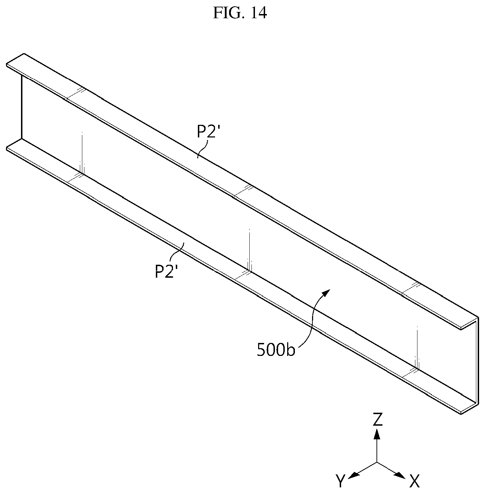

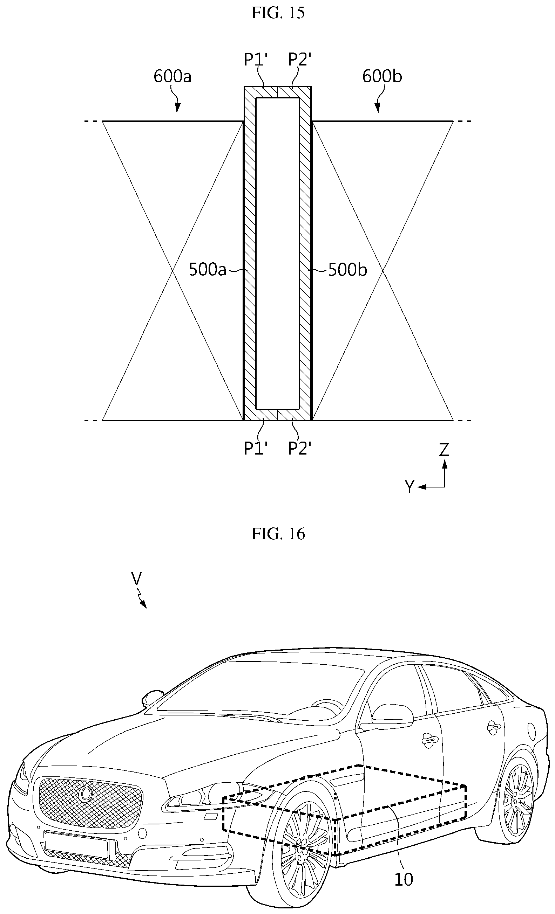

FIG. 13 is a perspective view showing a side wall to be coupled to the right end of a cell block according to still another embodiment of the present disclosure. FIG. 14 is a perspective view showing a side wall to be coupled to the left end of a cell block according to still another embodiment of the present disclosure. In addition, FIG. 15 is a front view schematically showing a coupling configuration of the side walls shown in FIGS. 13 and 14 when two cell blocks are disposed adjacent to each other according to still another embodiment of the present disclosure.

First, referring to FIG. 13, the first side wall 500a provided at the right end of the cell unit stack 300 in the left-right direction along the stacking direction of the cell unit 100 may have protrusions formed to protrude in an outward direction (e.g., right direction) at the upper and lower sides, as indicated by P1' in the main body 510a. And, referring to FIG. 14, the second side wall 500b provided at the left end of the cell unit stack 300 may have protrusions formed to protrude in an outward direction (e.g., left direction) at the upper and lower sides, as indicated by P2' in the main body 510b.

When a plurality of cell blocks 600 are disposed adjacent to each other, the first side wall 500a and the second side wall 500b of different cell blocks 600 may face each other, but in this case, the protrusions P1', P2' of the first side wall 500a and the second side wall 500b may be positioned to be symmetrical to each other.

Accordingly, as shown in FIG. 15, when the first cell block 600a and the second cell block 600b are positioned adjacent to each other, the first side wall 500a of the first cell block 600a and the second side wall 500b of the second cell block 600b may contact each other. Furthermore, they may be coupled to each other. The protrusion P1' provided on the first side wall 500a of the first cell block 600a and the protrusion P2' provided on the second side wall 500b of the second cell block 600b may contact and be coupled to each other.

In this case, the shapes of the first side wall 500a and the second side wall 500b may be completely congruent. Accordingly, since the cell block 600 may be manufactured by preparing side walls 500 of the same shape in batches and coupling them to both ends of the cell unit stack 300, there is no need to couple side walls of different shapes by taking into account the coupling direction of them, thereby facilitating the assembly process. And, in this embodiment, the side wall 500 may be configured such that both the front and rear sides are open while being coupled.

Meanwhile, the protrusion P1' of the first side wall 500a may be an extension portion of the main body 510a of the first side wall 500a bent perpendicular to the surface direction of the main body 510a of the first side wall 500a, and the protrusion P2' of the second side wall 500b may be an extension portion of the main body 510b of the second side wall 500b bent perpendicular to the surface direction of the main body 510b of the second side wall 500b.

In this case, the side wall 500 may be configured by bending a metal plate with a plate structure. That is, like the cell cover 200, it may be configured in a form bending one plate. The side wall 500 may be configured to include protrusions P1' by bending both ends of one plate in the same direction. According to this embodiment of the present disclosure, manufacturing of the side wall 500 may be more simplified.

The battery pack 10 according to an embodiment of the present disclosure may be applied to various devices. A representative example of these devices is transportation means such as electric bicycles, electric vehicles, hybrid vehicles, and the like, but the present disclosure is not limited thereto. The battery pack 10 is suitable for use as a battery pack for electric vehicles. In addition, it can be used as an energy source for an ESS.

FIG. 16 is a view schematically showing the configuration of a vehicle according to an embodiment of the present disclosure.

Referring to FIG. 16, a vehicle V according to an embodiment of the present disclosure may include the battery pack 10 according to an embodiment of the present disclosure described above. Here, the vehicle V may include, for example, a predetermined vehicle that uses electricity as a driving source, such as an electric vehicle or a hybrid vehicle. Also, in addition to the battery pack 10 according to the present disclosure, the vehicle V may further include various other components included in the vehicle, such as a vehicle body, a motor, or the like.

The battery pack 10 may be disposed at a predetermined location within the vehicle V. The battery pack 10 may be used as an electrical energy source to drive the vehicle V by providing driving force to the motor of the electric vehicle. In this case, the battery pack 10 has a high nominal voltage of 100 V or more.

The battery pack 10 may be charged or discharged by an inverter depending on the driving of the motor and/or internal combustion engine. The battery pack 10 may be charged by a regenerative charging device coupled to a brake. The battery pack 10 may be electrically connected to the motor of the vehicle V through an inverter.

### [Explanation of reference signs]

| | | | |
|---|---|---|---|
| 10: | battery pack | 100: | cell unit |
| 110: | pouch-type battery cell | 200: | cell cover |
| 300: | cell unit stack | 400: | pack case |
| 500: | side wall | 600: | cell block |

## Claims

1. A battery pack comprising:
a cell unit stack (300) in which a plurality of cell units (100) are stacked;
a pack case (400) accommodating the cell unit stack (300) in an internal space; and
side walls (500) respectively located at both ends of the cell unit stack (300) in the stacking direction in the internal space of the pack case (400) and configured to mechanically support the pack case (400), wherein the two side walls (500) have protrusions (P1, P2, P3) on their outer surfaces at different positions or at positions symmetrical to each other,
wherein the plurality of cell units (100) are stacked in at least one direction within the cell unit stack (300), and
the cell unit (100) comprises one or more pouch-type battery cells (110) and a cell cover (200) configured to at least partially surround the pouch-type battery cells (110).

2. The battery pack according to claim 1,
wherein the pack case (400) comprises a lower plate (410) and a plurality of side plates (420) upright upward from the lower plate (410),
wherein the side walls (500) are interposed between different side plates (420) of the pack case (400).

3. The battery pack according to claim 2,
wherein both ends of the side wall (500) are coupled and fixed to different side plates (420) of the pack case (400), respectively.

4. The battery pack according to claim 1,
wherein the side wall (500) is configured to have at least one side larger in size than the cell unit (100).

5. The battery pack according to any one of claims 1 to 4,
wherein a plurality of the cell unit stacks (300) are comprised along the stacking direction of the cell unit (100),
wherein the side wall (500) of one cell unit stack (300) and the side wall (100) of another cell unit stack (300) are adjacent to each other to form an internal space (S) partitioned by two side walls (500).

6. The battery pack according to claim 5,
wherein the internal space (S) extends in the horizontal direction orthogonal to the stacking direction of the cell units (100) to form a venting channel.

7. The battery pack according to claim 5,
wherein the two side walls (500) comprise a first side wall (500a) provided at the right end of the cell unit stack (300) and a second side wall (500b) provided at the left end of the cell unit stack (300) in the left-right direction along the stacking direction of the cell units (100),
wherein the first side wall (500a) has a protrusion (P1, P1') formed to protrude in the right direction at the upper or lower portion thereof, and the second side wall (500b) has a protrusion (P2, P2') formed to protrude in the left direction at the lower or upper portion thereof, and
the first side wall (500a) of one cell unit stack (300) is adjacent to the second side wall (500b) of another cell unit stack (300) to form the internal space (S).

8. The battery pack according to claim 7,
wherein the protrusion (P1, P1') of the first side wall (500a) and the protrusion (P2, P2') of the second side wall (500b) are located at different positions in the horizontal or vertical direction so as not to interfere with each other.

9. The battery pack according to claim 7,
wherein the protrusion (P1, P1') of the first side wall (500a) is an extension portion of the main body (510a) of the first side wall (500a) bent perpendicular to the main body surface direction of the first side wall (500a), and the protrusion (P2, P2') of the second side wall (500b) is an extension portion of the main body (510b) of the second side wall (500b) bent perpendicular to the main body surface direction of the second side wall (500b).

10. The battery pack according to claim 9,
wherein the protrusion (P1, P1') of the first side wall (500a) contacts or is coupled to the second side wall (500b), the protrusion (P2, P2') of the second side wall (500b) contacts or is coupled to the first side wall (500a), or the protrusion (P1, P1') of the first side wall (500a) contacts or is coupled to the protrusion (P2, P2') of the second side wall (500b).

11. The battery pack according to claim 7,
wherein either of the first side wall (500a) and the second side wall (500b) further comprises a protrusion (P3) formed to protrude in an outward direction at front or rear.

12. The battery pack according to claim 5,
wherein the side wall (500) protrudes upward over the cell unit stack (300), and an inlet hole (H) is formed at the portion where the side wall (500) protrudes.

13. A vehicle comprising a battery pack according to any one of claims 1 to 12.

## Patentansprüche

1. Ein Batteriepack, umfassend:
einen Zellenheinheitsstapel (300), in dem eine Vielzahl von Zelleneinheiten (100) gestapelt sind;
ein Packgehäuse (400), das den Zellenheinheitsstapel (300) in einem Innenraum aufnimmt; und
Seitenwände (500), die jeweils an beiden Enden des Zellenheinheitsstapels (300) in der Stapelrichtung im Innenraum des Packgehäuses (400) angeordnet und so konfiguriert sind, dass sie das Packgehäuse (400) mechanisch stützen, wobei die beiden Seitenwände (500) Vorsprünge (P1, P2, P3) auf ihren Außenflächen an unterschiedlichen Positionen oder an zueinander symmetrischen Positionen aufweisen,
wobei die Vielzahl von Zelleneinheiten (100) in mindestens einer Richtung innerhalb des Zellenheinheitsstapels (300) gestapelt sind, und
die Zelleneinheit (100) eine oder mehrere Pouch-Typ-Batteriezellen (110) und eine Zellenabdeckung (200) umfasst, die so konfiguriert ist, dass sie die Pouch-Typ-Batteriezellen (110) zumindest teilweise umgibt.

2. Der Batteriepack nach Anspruch 1,
wobei das Packgehäuse (400) eine untere Platte (410) und eine Vielzahl von Seitenplatten (420) umfasst, die von der unteren Platte (410) aufrecht nach oben stehen,
wobei die Seitenwände (500) zwischen verschiedenen Seitenplatten (420) des Packgehäuses (400) eingefügt sind.

3. Der Batteriepack nach Anspruch 2,
wobei beide Enden der Seitenwand (500) jeweils mit verschiedenen Seitenplatten (420) des Packgehäuses (400) gekoppelt und befestigt sind.

4. Der Batteriepack nach Anspruch 1,
wobei die Seitenwand (500) so konfiguriert ist, dass sie mindestens eine Seite aufweist, die größer ist als die Zelleneinheit (100).

5. Der Batteriepack nach einem der Ansprüche 1 bis 4,
wobei eine Vielzahl der Zellenheinheitsstapel (300) entlang der Stapelrichtung der Zelleneinheit (100) umfasst sind,
wobei die Seitenwand (500) eines Zellenheinheitsstapels (300) und die Seitenwand (100) eines anderen Zellenheinheitsstapels (300) aneinander angrenzen, um einen Innenraum (S) zu bilden, der durch zwei Seitenwände (500) abgetrennt ist.

6. Der Batteriepack nach Anspruch 5,
wobei sich der Innenraum (S) in der horizontalen Richtung orthogonal zur Stapelrichtung der Zelleneinheiten (100) erstreckt, um einen Entlüftungskanal zu bilden.

7. Der Batteriepack nach Anspruch 5,
wobei die beiden Seitenwände (500) eine erste Seitenwand (500a), die am rechten Ende des Zellenheinheitsstapels (300) vorgesehen ist, und eine zweite Seitenwand (500b) umfassen, die am linken Ende des Zellenheinheitsstapels (300) in der Links-Rechts-Richtung entlang der Stapelrichtung der Zelleneinheiten (100) vorgesehen ist,
wobei die erste Seitenwand (500a) einen Vorsprung (P1, P1') aufweist, der so ausgebildet ist, dass er in der rechten Richtung an ihrem oberen oder unteren Abschnitt vorsteht, und die zweite Seitenwand (500b) einen Vorsprung (P2, P2') aufweist, der so ausgebildet ist, dass er in der linken Richtung an ihrem unteren oder oberen Abschnitt vorsteht, und
die erste Seitenwand (500a) eines Zellenheinheitsstapels (300) an die zweite Seitenwand (500b) eines anderen Zellenheinheitsstapels (300) angrenzt, um den Innenraum (S) zu bilden.

8. Der Batteriepack nach Anspruch 7,
wobei der Vorsprung (P1, P1') der ersten Seitenwand (500a) und der Vorsprung (P2, P2') der zweiten Seitenwand (500b) an unterschiedlichen Positionen in der horizontalen oder vertikalen Richtung angeordnet sind, so dass sie sich nicht gegenseitig stören.

9. Der Batteriepack nach Anspruch 7,
wobei der Vorsprung (P1, P1') der ersten Seitenwand (500a) ein Verlängerungsabschnitt des Hauptkörpers (510a) der ersten Seitenwand (500a) ist, der senkrecht zur Hauptkörperoberflächenrichtung der ersten Seitenwand (500a) gebogen ist, und der Vorsprung (P2, P2') der zweiten Seitenwand (500b) ein Verlängerungsabschnitt des Hauptkörpers (510b) der zweiten Seitenwand (500b) ist, der senkrecht zur Hauptkörperoberflächenrichtung der zweiten Seitenwand (500b) gebogen ist.

10. Der Batteriepack nach Anspruch 9,
wobei der Vorsprung (P1, P1') der ersten Seitenwand (500a) die zweite Seitenwand (500b) berührt oder mit ihr gekoppelt ist, der Vorsprung (P2, P2') der zweiten Seitenwand (500b) die erste Seitenwand (500a) berührt oder mit ihr gekoppelt ist, oder der Vorsprung (P1, P1') der ersten Seitenwand (500a) den Vorsprung (P2, P2') der zweiten Seitenwand (500b) berührt oder mit ihm gekoppelt ist.

11. Der Batteriepack nach Anspruch 7,
wobei entweder die erste Seitenwand (500a) oder die zweite Seitenwand (500b) ferner einen Vorsprung (P3) umfasst, der so ausgebildet ist, dass er in einer nach außen gerichteten Richtung vorne oder hinten vorsteht.

12. Der Batteriepack nach Anspruch 5,
wobei die Seitenwand (500) nach oben über den Zellenheinheitsstapel (300) vorsteht, und ein Einlassloch (H) an dem Abschnitt ausgebildet ist, an dem die Seitenwand (500) vorsteht.

13. Ein Fahrzeug, umfassend einen Batteriepack nach einem der Ansprüche 1 bis 12.

## Revendications

1. Bloc-batterie comprenant :
un empilement d'unités de cellules (300) dans lequel une pluralité d'unités de cellules (100) sont empilées ;
un boîtier de bloc (400) logeant l'empilement d'unités de cellules (300) dans un espace interne ; et
des parois latérales (500) situées respectivement aux deux extrémités de l'empilement d'unités de cellules (300) dans la direction d'empilement dans l'espace interne du boîtier de bloc (400) et configurées pour supporter mécaniquement le boîtier de bloc (400), dans lequel les deux parois latérales (500) ont des saillies (P1, P2, P3) sur leurs surfaces extérieures à des positions différentes ou à des positions symétriques l'une par rapport à l'autre,
dans lequel la pluralité d'unités de cellules (100) sont empilées dans au moins une direction à l'intérieur de l'empilement d'unités de cellules (300), et
l'unité de cellule (100) comprend une ou plusieurs cellules de batterie de type poche (110) et un couvercle de cellule (200) configuré pour entourer au moins partiellement les cellules de batterie de type poche (110).

2. Le bloc-batterie selon la revendication 1,
dans lequel le boîtier de bloc (400) comprend une plaque inférieure (410) et une pluralité de plaques latérales (420) dressées vers le haut à partir de la plaque inférieure (410),
dans lequel les parois latérales (500) sont interposées entre différentes plaques latérales (420) du boîtier de bloc (400).

3. Le bloc-batterie selon la revendication 2,
dans lequel les deux extrémités de la paroi latérale (500) sont respectivement couplées et fixées à différentes plaques latérales (420) du boîtier de bloc (400).

4. Le bloc-batterie selon la revendication 1,
dans lequel la paroi latérale (500) est configurée pour avoir au moins un côté de taille supérieure à celle de l'unité de cellule (100).

5. Le bloc-batterie selon l'une quelconque des revendications 1 à 4,
dans lequel une pluralité des empilements d'unités de cellules (300) sont compris le long de la direction d'empilement de l'unité de cellule (100),
dans lequel la paroi latérale (500) d'un empilement d'unités de cellules (300) et la paroi latérale (100) d'un autre empilement d'unités de cellules (300) sont adjacentes l'une à l'autre pour former un espace interne (S) cloisonné par deux parois latérales (500).

6. Le bloc-batterie selon la revendication 5,
dans lequel l'espace interne (S) s'étend dans la direction horizontale orthogonale à la direction d'empilement des unités de cellules (100) pour former un canal d'évent.

7. Le bloc-batterie selon la revendication 5,
dans lequel les deux parois latérales (500) comprennent une première paroi latérale (500a) prévue à l'extrémité droite de l'empilement d'unités de cellules (300) et une seconde paroi latérale (500b) prévue à l'extrémité gauche de l'empilement d'unités de cellules (300) dans la direction gauche-droite le long de la direction d'empilement des unités de cellules (100),
dans lequel la première paroi latérale (500a) a une saillie (P1, P1') formée pour faire saillie dans la direction droite au niveau de sa partie supérieure ou inférieure, et la seconde paroi latérale (500b) a une saillie (P2, P2') formée pour faire saillie dans la direction gauche au niveau de sa partie inférieure ou supérieure, et
la première paroi latérale (500a) d'un empilement d'unités de cellules (300) est adjacente à la seconde paroi latérale (500b) d'un autre empilement d'unités de cellules (300) pour former l'espace interne (S).

8. Le bloc-batterie selon la revendication 7,
dans lequel la saillie (P1, P1') de la première paroi latérale (500a) et la saillie (P2, P2') de la seconde paroi latérale (500b) sont situées à des positions différentes dans la direction horizontale ou verticale de manière à ne pas interférer l'une avec l'autre.

9. Le bloc-batterie selon la revendication 7,
dans lequel la saillie (P1, P1') de la première paroi latérale (500a) est une partie d'extension du corps principal (510a) de la première paroi latérale (500a) pliée perpendiculairement à la direction de la surface du corps principal de la première paroi latérale (500a), et la saillie (P2, P2') de la seconde paroi latérale (500b) est une partie d'extension du corps principal (510b) de la seconde paroi latérale (500b) pliée perpendiculairement à la direction de la surface du corps principal de la seconde paroi latérale (500b).

10. Le bloc-batterie selon la revendication 9,
dans lequel la saillie (P1, P1') de la première paroi latérale (500a) est en contact ou est couplée à la seconde paroi latérale (500b), la saillie (P2, P2') de la seconde paroi latérale (500b) est en contact ou est couplée à la première paroi latérale (500a), ou la saillie (P1, P1') de la première paroi latérale (500a) est en contact ou est couplée à la saillie (P2, P2') de la seconde paroi latérale (500b).

11. Le bloc-batterie selon la revendication 7,
dans lequel l'une ou l'autre parmi la première paroi latérale (500a) et la seconde paroi latérale (500b) comprend en outre une saillie (P3) formée pour faire saillie vers l'extérieur à l'avant ou à l'arrière.

12. Le bloc-batterie selon la revendication 5,
dans lequel la paroi latérale (500) fait saillie vers le haut par-dessus l'empilement d'unités de cellules (300), et un trou d'entrée (H) est formé sur la partie où la paroi latérale (500) fait saillie.

13. Véhicule comprenant un bloc-batterie selon l'une quelconque des revendications 1 à 12.
